# EUROPÄISCHE PATENTSCHRIFT

(11) **EP 1 528 992 B1**
(45) Veröffentlichungstag und Bekanntmachung des Hinweises auf die Patenterteilung: **05.03.2008**
(21) Anmeldenummer: 03718620.2
(22) Anmeldetag: 12.03.2003
(51) Int. Cl.: B60R 21/00, B60R 21/01

(54) **VERFAHREN ZUR ERKENNUNG EINES ÜBERROLLVORGANGS**
METHOD FOR RECOGNIZING A ROLLOVER EVENT
PROCEDE DETECTEUR D'UN PROCESSUS DE CULBUTE

(30) Priorität: 03.08.2002 DE 10235567
(43) Veröffentlichungstag der Anmeldung: 11.05.2005
(73) Patentinhaber: ROBERT BOSCH GMBH, 70442 Stuttgart (DE)
(72) Erfinder: LAHMANN, Robert, 70174 Stuttgart (DE); SCHMID, Michael, 70806 Kornwestheim (DE); KROENINGER, Mario, 77815 Buehl (DE)
(86) Internationale Anmeldenummer: PCT/DE2003/000781
(87) Internationale Veröffentlichungsnummer: WO 2004/018262

(56) Entgegenhaltungen:
- EP-A- 1 270 337
- WO-A-00/58133
- DE-A- 10 010 633

## Beschreibung

### Stand der Technik

Die Erfindung geht aus von einem Verfahren zur Erkennung eines Überrollvorganges nach der Gattung des unabhängigen Patentanspruches.

Aus DE 197 44 083 A1 (Oberbegriff von Anspruch 1) ist es bekannt, einen Überrollvorgang durch Beschleunigungssensoren in mindestens zwei Raumrichtungen und mit mindestens einem Drehratensensor zu detektieren und zu plausibilisieren.

### Vorteile der Erfindung

Das erfindungsgemäße Verfahren zur Erkennung eines Überrollvorganges mit den Merkmalen des unabhängigen Patentanspruchs hat demgegenüber den Vorteil, dass insbesondere. Überschläge um die Fahrzeugquerachse, also die y-Achse, ohne zusätzliche Sensorik erkannt werden können. Insbesondere wird erfindungsgemäß darauf verzichtet, die Beschleunigung an mehreren Punkten im Fahrzeug zu messen und die Drehbewegung des Fahrzeugs aus dem Vergleich der Messungen herzuleiten. Statt dessen wird vorteilhafter Weise ausgenutzt, dass die Erdbeschleunigung bei einem Überschlag um die y-Achse eine Änderung der gemessenen z-Beschleunigung, also in Fahrzeugvertikalrichtung im fahrzeugfesten Koordinatensystem bewirkt. Eine solche Messung ist an jedem beliebigen Punkt im Fahrzeug möglich, also auch mit der Sensorik im zentralen Airbag-Steuergerät. Dies bedeutet, dass ohne zusätzlichen Kostenaufwand für Hardware der Insassenschutz bei Überschlägen um die y-Achse optimiert wird. Neben dem Hauptnutzen der Erfindung in der Sensierung von y-Oberschlägen ist es jedoch möglich, mit den erfindungsgemäßen Verfahren auch Überschläge um die x-Achse, also die Fahrzeuglängsrichtung zu sensieren.

Dafür ist lediglich eine Vertauschung der x- und y-Aclisen bei der Sensierung notwendig. Insbesondere bei Überschlägen über die Fahrzeugquerachse werden Beschleunigungssensoren in x- und z-Richtung für die Sensierung des Überschlages verwendet, um dann die entsprechenden Rückhaltemittel zum Schutz der Fahrzeuginsassen zu aktivieren.

Durch die in den abhängigen Ansprüchen aufgeführten Maßnahmen und Weiterbildungen sind vorteilhafte Verbesserungen des im unabhängigen Patentanspruch angegebenen Verfahrens zur Erkennung eines Überrollvorganges möglich.

Besonders vorteilhaft ist, dass das Inertialereignis, mit dem die Messung bzw. Detektion des Überrollereignisses eingeleitet wird, die Auslösung von Rückhaltemitteln ist. Alternativ ist es möglich, dass ein Frontauslösealgorithmus oder ein Seitenairbagalgorithmus bei einer bestimmten Stelle ein entsprechendes Signal an den Überrollvorgangdetektionsalgorithmus übergibt. Dieses Signal kann auch nur abhängig von einem gemessenen Beschleunigungssignal in Fahrzeuglängsrichtung oder Fahrzeugquerrichtung oder einem Integral dieser gemessenen Beschleunigung sein. Das Inertialereignis ist folglich das Startereignis für das erfindungsgemäße Verfahren.

Darüber hinaus ist es dann von Vorteil, dass bei der Detektion des Überrollvorgangs folgende Merkmale in Fahrzeugvertikalrichtung bei der Beschleunigung ausgewertet werden. Die Beschleunigung muss zunächst beim Inertialereignis negativ sein, also in Richtung Fahrzeugboden weisen. Gleichzeitig muss die Fahrzeugvertikalbeschleunigung einen positiven Gradienten aufweisen, da dann eine langsame Änderung beim Überschlag von -1 g auf 0g stattfindet. Vorteilhafter Weise können zusätzlich Beschleunigungen in Fahrzeugquerrichtung beobachtet werden, um beispielsweise über die Integralbildung der Beschleunigung in y-Richtung festzustellen, dass keine Seitwärtsbewegung vorkommt. Dies würde nämlich auf einen Überschlag um die x-Achse hinweisen. Alternativ oder ergänzend kann bei Vorhandensein eines Drehratensensors um die x-Achse durch Auswertung dessen Signals ein Überschlag um die x-Achse ausgeschlossen werden. Wenn sich jedoch das Fahrzeug überschlägt, dann muss das in geeigneter Weise verarbeitete Signal der Beschleunigung in Fahrzeuglängsrichtung, also in x-Richtung einen kleinen Wert von unterhalb einem g mit einem geringen Anteil an hochfrequenten Schwingungen und mit einem positiven Gradienten aufweisen, bis das Fahrzeug letztlich Aus WO 00/58133 A1 ist es bekannt, einen Drehwinkel eines Fahrzeugs aus dem Signal eines lateralen Beschleunigungssensors und einem Signal eines vertikalen Beschleunigungssensors zu bestimmen. Die Drehrate wird mittels eines Drehratensensors bestimmt. Aus diesen beiden Werten ergibt sich ein Vektor, der in einem Drehwinkel-Drehraten-Diagramm eingetragen wird und mit einer Kennlinie, die dort vorgesehen ist, verglichen wird. Je nach Lage in Bezug zu dieser Kennlinie wird auch die Ansteuerung von Personenschutzmitteln entschieden. senkrecht steht. Dadurch kann erkannt werden, dass sich das Fahrzeug nicht mehr in einem Schleudervorgang auf der Strasse befindet.

Weiterhin ist es von Vorteil, dass aus dem gemessenen Wert der z-Beschleunigung im fahrzeugfesten System durch einen geeigneten Tiefpassfilter der Anteil der Erdbeschleunigung an der gesamten Beschleunigung in z-Richtung extrahiert wird, so dass sich die gemessene Beschleunigung von -1g (d.h. das Fahrzeug befindet sich in normaler Position, die Erdbeschleunigung zeigt nach unten) über 0g (das Fahrzeug steht senkrecht) auf +1 g (das Fahrzeug liegt auf dem Dach) ändert. Es muss dabei sicher gestellt werden, dass eine Offsetnachregelung des z-Beschleunigungssignals während des Fahrbetriebs langsam genug erfolgt, um die Messung des y-Überschlags nicht zu verfälschen. Diese Offset-Nachregelung kann situationsbezogen abgeschaltet werden. Zusätzlich kann das x-Beschleunigungssignal ausgewertet werden, dessen Verlauf qualitativ wie folgt aussehen wird:
Ist das Inertialereignis der Aufprall der Fahrzeugfront, so führt dieser zu hochfrequenten Schwingungen, verbunden mit einem hohen Wert für das Integral über die x-Beschleunigung auf Grund der starken Abbremsung des Fahrzeugs. Anschließend wird das in geeigneter Form verarbeitete x-Beschleunigungssignal den Wert von 1g erreichen, d.h. das Fahrzeug steht nun senkrecht, um schließlich wieder auf 0g zu sinken, das Fahrzeug liegt auf dem Dach.

Schließlich ist es auch von Vorteil, wenn auf das Inertialereignis kein Überschlag des Fahrzeugs um die y-Achse folgt, dass dann ein Zeitpunkt definiert wird, bis zu dem der y-Überroll-Algorithmus maximal aktiviert bleibt. Eine bevorzugte Möglichkeit, den Zeitpunkt festzulegen, erfolgt über eine geeignete Detektierung der Eigenbewegung des Fahrzeugs. Wenn sich das Fahrzeug nicht mehr bewegt, dann wird für eine vorgegebene Zeit gewartet, bis ein Zeitpunkt erreicht wird, der vorgegeben ist und dann keine Auslösung der Rückhaltemittel für den y-Überschlag mehr möglich ist. Eine weitere Möglichkeit ist, diesen Zeitpunkt auf eine vordefinierte Zeit nach dem Zeitpunkt des Inertialereignisses festzulegen. Dieser Zeitpunkt kann auch aufgrund anderer Gesichtspunkte, zum Beispiel der Verfügbarkeit der Stromzufuhr für die Aktivierung der Insassenschutzsysteme bzw. für den Betrieb der benötigten Sensoren festgelegt werden. Außerdem können andere Ereignisse eintreten, die zur Auslösung der für einen y-Überschlag vorgesehenen Insassenschutzsysteme führen, so dass eine weitere Sensierung des y-Überschlages nicht notwendig ist.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Vorrichtung,
- Figur 2: einen Überrollvorgang in y-Richtung,
- Figur 3: ein weiteres Blockschaltbild der erfindungsgemäßen Vorrichtung und
- Figur 4: einen Zeitverlauf eines Fahrzeugüberschlages in y-Richtung.

### Beschreibung

Moderne Systeme zur Überrollsensierung arbeiten üblicher Weise mit mikromechanischen Drehratensensoren, die über eine numerische Integration auch die Berechnung des Drehwinkels erlauben. Die Kombination von Drehraten- und Drehwinkelinformation ermöglicht eine Vorhersage des Überrollens und somit einer Auslöseentscheidung, die robuster und flexibler ist als eine Auslösung über eine feste Winkelschwelle eines Neigungssensors. Auf Drehratensensoren beruhende Überroll-Sensierungssysteme erlauben somit auch die Auslösung irreversibler Rückhaltemittel wie Gurtstraffer und Airbags zusätzlich zu der ursprünglichen Anwendung der Überrollsensierung, dem Auslösen eines Überrollbügels im Cabriolet.

Dennoch haben Neigungssensoren den Vorteil, dass sie sowohl Neigungen um die x- als auch um die y-Achse, sowie jede beliebige Kombination sensieren, wohingegen Drehratensensoren nur eine Sensierrichtung aufweisen. Theoretisch lässt sich dieser Nachteil leicht beheben, indem man zwei Drehratensensoren verwendet, je einen für die x- und die y-Achse. Statistisch handelt es sich jedoch bei der überwiegenden Anzahl aller Überrollvorgänge im Feld um Überschläge um die x-Achse, also die Fahrzeuglängsachse, so dass aus Kostengründen nur ein Drehratensensor üblicher Weise verwendet wird. Eine Sensierung von Überschlägen um die y-Achse wird somit in derzeitigen Systemen üblicherweise nicht vorgenommen.

Moderne Systeme zur Auslösung von Rückhaltemitteln enthalten neben Drehratensensoren auch eine Sensorik zum Messen der x- und y-Beschleunigung für die Sensierung von Front- und Seitenchrashes. Des weiteren werden in vielen Fällen y- und z-Sensoren als Sicherheitsfunktion, d.h. als unabhängiger Plausibilisierungspfad für die auf dem Drehratensensor basierende Auslöseentscheidung bei Überroll-Ereignissen eingesetzt.

Erfindungsgemäß werden nun Beschleunigungssensoren in x- und z-Richtung eingesetzt, um eine Sensierung von Überschlägen über die y-Achse vorzunehmen und somit entsprechende Rückhaltemittel zum Schutz der Fahrzeuginsassen zu aktivieren. Insbesondere ermöglicht damit die erfindungsgemäße Vorrichtung die Sensierung von y-Überschlägen ohne eine weitere zusätzliche Sensorik im Fahrzeug verbauen zu müssen. Eine solche Messung ist an jedem beliebigen Punkt im Fahrzeug möglich, also auch mit der Sensorik im zentralen Airbagsteuergerät. Das bedeutet, dass ohne zusätzlichen Kostenaufwand für Hardware der Insassenschutz bei Überschlägen um die y-Achse optimiert wird. Mit der erfindungsgemäßen Vorrichtung ist es jedoch auch möglich, Überschläge über die x-Achse zu sensieren. Dafür müssen nur in der Anmeldung die x- und die y-Achse vertauscht werden.

Im Folgenden wird ein fahrzeugfestes Koordinatensystem benutzt, bei dem die x-Achse nach vorne, die y-Achse nach links und die z-Achse nach oben zeigt. Wenn das Fahrzeug auf ebener Erde steht, dann zeigt die Erdbeschleunigung also in negativer Richtung, d.h. sie hat einen Wert von -1g.

Zunächst wird auf Grund eines Inertialereignisses der y-Überrollalgorithmus aktiviert. Als Inertialereignis dient ein Signal, das typischer Weise einem Überschlag um die y-Achse vorausgeht. Ein Fahrzeug, das beispielsweise mit hoher Geschwindigkeit in einen abschüssigen Graben fährt, läuft Gefahr, sich über die Fahrzeugfront, also um die y-Achse, die Fahrzeugquerachse, zu überschlagen. Ein geeignetes Inertialereignis wäre in diesem Fall die Auslösung der Frontairbags über den Frontalgorithmus oder ein hoher Wert für die x-Beschleunigung und/oder deren Integral.

Während des y-Überschlags ergibt sich eine vergleichsweise langsame Änderung der im Fahrzeug gemessenen z-Beschleunigung auf Grund der Änderung des fahrzeugfesten Koordinatensystems gegenüber der Wirk-ungsrichtung der Erdbeschleunigung. Wird aus dem gemessenen Wert der z-Beschleunigung im fahrzeugfesten System durch einen geeigneten Tiefpassfilter der Anteil der Erdbeschleunigung an der gesamten Beschleunigung in z-Richtung extrahiert, so erwartet man eine Änderung von -1g über 0g auf 1g. Dies entspricht dann, dass sich zunächst das Fahrzeug in der normalen Position befindet, dann senkrecht steht, und schließlich auf dem Dach liegt. Es muss dabei sicher gestellt werden, dass eine Offsetnachregelung des z-Beschleunigungssignals entweder situationsbezogen abgeschaltet ist oder während des Fahrbetriebs langsam genug erfolgt, um die Messung während des y-Überschlags nicht zu verfälschen.

Zusätzlich kann das x-Beschleunigungssignal ausgewertet werden, dessen Verlauf qualitativ wie folgt aussehen wird:
Ist das Inertialereignis der Aufprall der Fahrzeugfront, so führt dieser zu hochfrequenten Schwingungen, verbunden mit einem hohen Wert für das Integral über die x-Beschleunigung auf Grund der starken Abbremsung des Fahrzeugs. Anschließend wird das in geeigneter Form verarbeitete Beschleunigungssignal den Wert von 1g erreichen. Hier steht nun das Fahrzeug senkrecht, um schließlich wieder auf 0g zu sinken, das Fahrzeug liegt dann auf dem Dach.

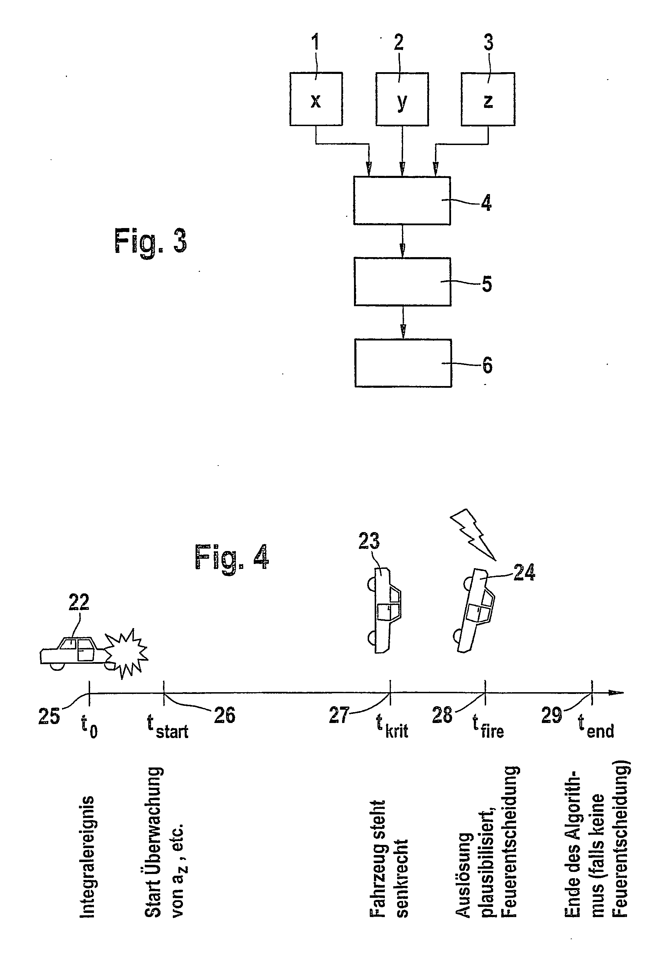

Zunächst wird also ein Inertialereignis detektiert, das den y-Überrollalgorithmus aktiviert. Typischer Weise kann dieses Ereignis ein Frontaufprall sein, der über den x-Beschleunigungssensor detektiert wird. Der Zeitpunkt des Inertialereignisses wird im Folgenden als t₀, also als Startzeitpunkt des y-Überroll-Algorithmus definiert. Der Zeitstreifen im weiteren Verlauf des Überrollalgorithmus ist in Figur 4 dargestellt. Es ist sinnvoll, den Zeitpunkt t₀, hier mit dem Bezugszeichen 25 bezeichnet, bei erneuter hinreichend starker Aktivität des x-Beschleunigungssignals erneut zu setzen. Auf diese Weise können Fälle abgedeckt werden, in denen ein Fahrzeug beispielsweise zunächst einen Frontalzusammenstoß auf der Straße hat, dann von der Straße schleudert und sich schließlich im Straßengraben überschlägt. Hier ist der zweite Aufprall der für die Einleitung des y-Überschlags entscheidende.

Zu einem Zeitpunkt tₛₜₐᵣₜ, in Figur 4 mit dem Bezugszeichen 26 bezeichnet, mit tₛₜₐᵣₜ ≥ t₀, werden die durch das Inertialeigeignis verursachten hochfrequenten Schwingungen in x-, y- und z-Richtung hinreichend stark abgeklungen sein. Abhängig von dem Fahrzeug kann tₛₜₐᵣₜ auch gleich t₀ sein. Ab dem Zeitpunkt tₛₜₐᵣₜ bis zum Zeitpunkt t_{end}, hier mit dem Bezugszeichen 29 bezeichnet, das ist das Ende des y-Überrollalgorithmus, bzw. t_{fire} mit dem Bezugszeichen 28 bezeichnet, das ist die Feuerentscheidung des Algorithmus, wird die in geeigneter Weise verarbeitete z-Beschleunigung az auf bestimmte Merkmale hin überwacht. Als solche Merkmale können dienen:
Zum Zeitpunkt tₛₜₐᵣₜ muss die Vertikalbeschleunigung az negativ sein und zusätzlich muss das auf geeignete Weise verarbeitete Signal az einen positiven Gradienten aufweisen, also eine langsame Änderung von -1g auf 0g.

Zusätzlich können die auf geeignete Weise verarbeiteten Beschleunigungssignale in x- und y-Richtung ax und ay überwacht werden:
Zum Beispiel kann durch Bildung des Integrals von ay überwacht werden, dass das Fahrzeug keine signifikante Seitwärtsbewegung ausübt, was auf einen Überschlag um die y-Achse hinweisen würde.

Alternativ kann bei Vorhandensein eines Drehratensensors um die x-Achse dessen Signal ausgewertet werden, um einen Überschlag um die x-Achse von einem Überschlag um die y-Achse zu trennen.

Wenn sich das Fahrzeug überschlägt, dann muss das in geeigneter Weise verarbeitete Signal ax einen kleinen Wert von unterhalb 1g mit geringem Anteil an hochfrequenten Schwingungen und mit einem positiven Gradienten aufweisen, bis das Fahrzeug senkrecht steht. Dadurch kann erkannt werden, dass sich das Fahrzeug nicht mehr in einem Schleudervorgang auf der Straße befindet. Der Zeitpunkt tₖᵣᵢₜ, in Figur 4 mit 27 bezeichnet, zu dem das Fahrzeug senkrecht steht, ist durch den Nulldurchgang des Signals az definiert. Eine Auslösung geeigneter Insassenschutzsysteme erfolgt, wenn bis zu einem Zeitpunkt t_{fire} 28 mit tₖᵣᵢₜ ≤ t_{fire} ≤ t_{end} die Auslösung plausibel ist. Die Plausibilisierung wird durch die Überwachung der Signale ax, ay und az vorgenommen, und zwar auf ähnliche Weise, wie oben allgemein für die Überwachung im Zeitraum tₛₜₐᵣₜ bis t_{end} beschrieben. Dies ist beispielsweise eine Gradientenüberwachung von ax und/oder az oder die Betrachtung der Beschleunigungswerte von ax, ay und az. Für den Fall, dass auf das Inertialereignis kein Überschlag des Fahrzeugs um die y-Achse folgt, ist es sinnvoll, einen Zeitpunkt t_{end} zu definieren, bis zu dem der y-Überrollalgorithmus maximal aktiviert bleibt. Eine bevorzugte Möglichkeit, den Zeitpunkt t_{end} festzulegen, erfolgt über eine geeignete Detektierung der Eigenbewegung des Fahrzeugs. Wenn sich das Fahrzeug nicht mehr bewegt, dann wird noch einen geeigneten Zeitraum lang gewartet, bis der Zeitpunkt t_{end} erreicht wird und somit keine Auslösung der Rückhaltemittel für den y-Überschlag mehr möglich ist. Eine weitere Möglichkeit ist, t_{end} auf eine vordefinierte Zeit nach dem Zeitpunkt t₀ festzulegen. Der Zeitpunkt t_{end} kann auch aufgrund anderer Gesichtspunkte, zum Beispiel der Verfügbarkeit von Stromzufuhr für die Aktivierung der Insassenschutzsysteme bzw. für den Betrieb der benötigen Sensoren festgelegt werden. Außerdem können andere Ereignisse eintreten, die zur Auslösung der für einen y-Überschlag vorgesehenen Insassenschutzsysteme führen, so dass eine weitere Sensierung des y-Überschlags nicht notwendig ist.

Figur 4 zeigt also einen y-Überschlag in seinem zeitlichen Verlauf. Zum Zeitpunkt t₀ erleidet das Fahrzeug 22 einen Frontalaufprall. Dies wird als Inertialereignis gewertet. Zum Zeitpunkt tₛₜₐᵣₜ 26 wird nun die Überwachung der Beschleunigung in z-Richtung und der anderen Beschleunigungen durchgeführt. Zum Zeitpunkt tₖᵣᵢₜ 27 ist das Fahrzeug in der Position 23 angelangt, d.h. es steht senkrecht auf der Front. Zum Zeitpunkt 28, t_{fire}, überschlägt sich nun das Fahrzeug 24 aus der senkrechten Position und die Rückhaltemittel werden ausgelöst, sofern eine Plausibilität vorliegt. Zum Zeitpunkt t_{end} 29 wird der Algorithmus beendet, falls bis dahin keine Auslöse- oder Feuerentscheidung getroffen wurde.

Die erfindungsgemäße Vorrichtung ist als ein Blockschaltbild in Figur 3 dargestellt. Beschleunigungssensoren 1, 2 und 3, die in x-, y- und z-Richtung die Beschleunigung aufnehmen, sind an einen Prozessor 4 angeschlossen. Die Beschleunigungssensoren 1, 2 und 3 sind hier als digitale Sensoren ausgebildet, d.h. sie geben bereits ein digitales Signal an den Prozessor 4 ab und beinhalten damit selbst wenigstens einen Analog-Digital-Wandler. Es können mehr als diese drei Sensoren, also beispielsweise auch ein Drehratensensor um die x-Achse, verwendet werden. Für die Überrollsensierung in y-Richtung ist es nur notwendig, den Sensor in z-Richtung, also den Sensor 3 einzusetzen. Um Überschläge in x- und y-Richtung zu unterscheiden, muss zusätzlich der Sensor in x-Richtung, also der Sensor 1 oder der Sensor 2 in y-Richtung verwendet werden. Die Sensoren 1 und 2 sowie möglicherweise vorhandene weitere Sensoren können außerdem zur Plausibilisierung der Überrollsensierung verwendet werden. Der Prozessor 4 führt die eben dargestellt Auswertung der Beschleunigungssignale durch. Dabei wird jedoch der Algorithmus für den Überrollvorgang in y-Richtung erst aktiviert, wenn ein Inertialereignis festgestellt wurde. Wie oben dargestellt, gilt als ein solches Inertialereignis beispielsweise ein Frontaufprall, der zur Auslösung von Frontairbags führt. Dieses Inertialereignis muss für einen Beginn eines Überrollvorgangs in y-Richtung typisch sein. Um Überrollvorgänge um die x-Achse zu sensieren ist es notwendig, entsprechende Inertialereignisse festzulegen. Hier kann beispielsweise ein Seitenaufprall ein Inertialereignis sein. Hat der Prozessor 4 einen Überrollvorgang erkannt, dann wird er, wenn er eine Auslöseentscheidung trifft, zum Zeitpunkt t_{fire} ein entsprechendes Signal an die Zündkreisansteuerung 5 übertragen, die dann Rückhaltemittel 6, wie Airbags oder Gurtstraffer oder Überrollbügel auslöst.

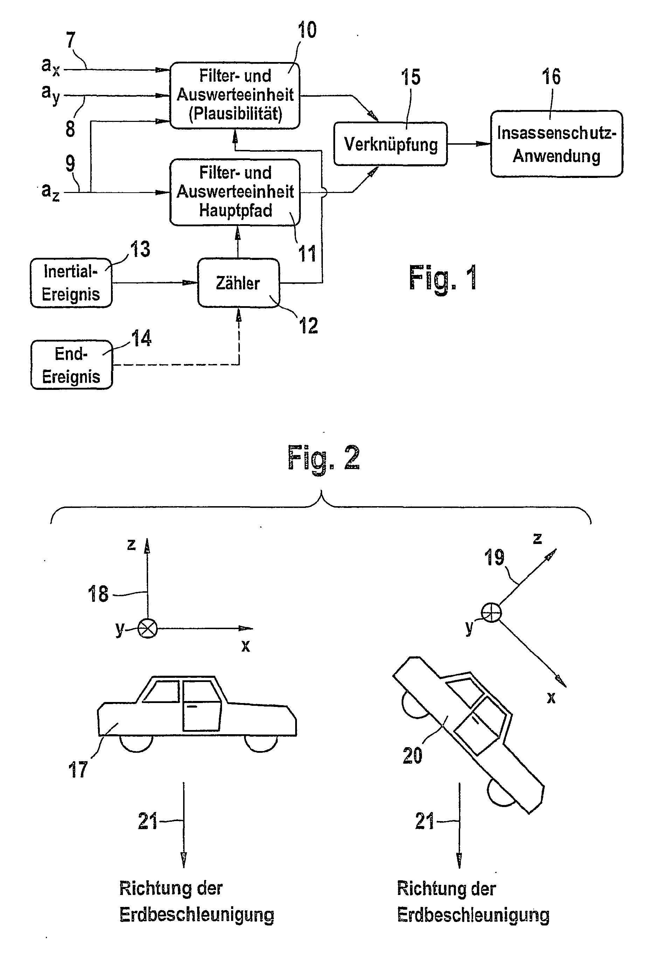

Figur 1 zeigt als Blockbild die erfindungsgemäße Vorrichtung bzw. ein erfindungsgemäßes Verfahren. In eine Filter- und Auswerteeinheit 10 werden die Beschleunigungen in x-Richtung 7 und y-Richtung 8, sowie z-Richtung 9 eingespeist. Die Filter- und Auswerteeinheit 10 führt auch die Plausibilität durch. Die Filter- und Auswerteeinheit 11 stellt den Hauptpfad dar. Hier wird lediglich das Beschleunigungssignal in z-Richtung 9 eingespeist. Ein Inertialereignis 13 startet einen Zähler 12. Dieser Zähler kann durch ein Endereignis 14 angehalten werden. Der Zähler 12 ist mit der Filter- und Auswerteeinheit 11 im Hauptpfad verbunden. Stellen beide Filter- und Auswerteeinheiten 10 und 11 die Auslösung der Rückhaltemittel fest, also bilden beide eine Auslöseentscheidung, dann wird dies in der Verknüpfung 15 zu einem Signal führen, das zur Auslösung einer Insassenschutzanwendung 16 führt.

Das Inertialereignis 13 startet also den Zähler 12 und damit den y-Überrollalgorithmus. Die gemessenen Beschleunigungen 7, 8 und 9 werden den Filter- und Auswerteeinheiten 10 und 11 für den Hauptpfad und die Plausibilität durchgeführt. Der Zähler 12 kann die Filter- und Auswerteeinheiten 11 und 10 beeinflussen, indem er die Zeitpunkte tₛₜₐᵣₜ und t_{end} sowie den Zeitraum zwischen tₖᵣᵢₜ und t_{fire} festlegt. Optional kann der Endzeitpunkt des Algorithmus t_{end} durch ein externes Endereignis bestimmt werden. Die Entscheidung der Filter- und Auswerteeinheiten 10 und 11 für den Hauptpfad und die Plausibilität werden in einer bevorzugten Anwendung durch ein logisches UND-Gatter 15 verknüpft und somit eine Auslöseentscheidung für die Insassenschutzanwendung 16 getroffen.

Figur 2 zeigt noch einmal, wie sich das fahrzeugfeste Koordinatensystem 18 bei einem in Normalposition befindlichen Auto 17 befindet. Hier wird die Beschleunigung der Erde in Richtung des Fahrzeugbodens 21 ermittelt. Überschlägt sich nun das Fahrzeug 20 über die y-Achse, dann dreht sich auch das Koordinatensystem 18 mit. Die Richtung der Erdbeschleunigung 21 ist nun relativ zum Fahrzeug verschieden.

Wie oben dargestellt ist es möglich, durch vertauschen der x- und y-Sensoren und - Richtungen auch Überschläge um die x-Achse, die häufiger vorkommen, durch die erfindungsgemäße Vorrichtung zu detektieren.

## Patentansprüche

1. Verfahren zur Erkennung eines Überrollvorgangs mit wenigstens einem ersten Beschleunigungssensor (3, 9) in Fahrzeugvertikalrichtung und mit wenigstens einem zweiten Beschleunigungssensor (1, 2) in wenigstens einer Fahrzeughorizontalrichtung, **dadurch gekennzeichnet, dass** ein Prozessor (4, 10, 11) ein Inertialereignis (13) in Abhängigkeit von einem ersten Signal des wenigstens einen zweiten Beschleunigungssensors (1, 2) erkennt und nach Erkennung des Inertialereignisses (13) ein zweites Signal von dem wenigstens einen ersten Beschleunigungssensor (3, 9) zur Erkennung des Überrollvorganges auswertet und in Abhängigkeit davon Rückhaltemittel (6, 16) ansteuert.

2. Verfahren nach Anspruch 1, **dadurch gekennzeichnet, dass** der Prozessor (4, 10, 11) das Inertialereignis (13) als die Auslösung von Rückhaltemitteln (6, 16) bei einem Frontaufprall oder einem Seitenaufprall oder in Abhängigkeit von einem Beschleunigungssignal in Fahrzeuglängsrichtung oder in Fahrzeugquerrichtung erkennt.

3. Verfahren nach Anspruch 1 oder 2, **dadurch gekennzeichnet, dass** der Prozessor (4, 10, 11) die Auswertung durch die Prüfung von Merkmalen dadurch durchführt, dass die Beschleunigung in Fahrzeugvertikalrichtung beim Inertialereignis (13) negativ ist und einen positiven Gradienten aufweist.

4. Verfahren nach Anspruch 3, **dadurch gekennzeichnet, dass** der Prozessor (4, 10, 11) zusätzlich die Beschleunigung in Fahrzeugquerrichtung und/oder eine Drehrate um die Fahrzeuglängsrate auswertet, um eine Seitwärtsbewegung zu erkennen.

5. Verfahren nach Anspruch 3 und 4, **dadurch gekennzeichnet, dass** der Prozessor (4, 10, 11) die Fahrzeugbeschleunigung in Fahrzeuglängsrichtung auswertet.

6. Verfahren nach einem der vorherigen Ansprüche, **dadurch gekennzeichnet, dass** die Vorrichtung einen Tiefpass (10,11) zur Filterung der Beschleunigung in Fahrzeugvertikalrichtung verwendet, um die Erdbeschleunigung zu extrahieren.

7. Verfahren nach Anspruch 6, **dadurch gekennzeichnet, dass** der Beschleunigungssensor (3, 9) in Fahrzeugvertikalrichtung eine Offsetregelung verwendet, die langsam ausgebildet ist.

8. Verfahren nach einem der vorherigen Ansprüche, **dadurch gekennzeichnet, dass** bei einer fehlenden Detektion eines Überrollvorgangs nach einem ersten Inertialereignis (13) eine Überwachung auf ein erneutes Inertialereignis möglich ist.

9. Verfahren nach einem der vorhergehenden Ansprüche, **dadurch gekennzeichnet, dass** Plausibilitätssensoren (7, 8) verwendet werden.

## Claims

1. Method for identifying a rollover sequence, comprising at least one first acceleration sensor (3, 9) in the vertical direction of the vehicle, and comprising at least one second acceleration sensor (1, 2) in at least one horizontal direction of the vehicle, **characterized in that** a processor (4, 10, 11) identifies an inertial event (13) as a function of a first signal from the at least one second acceleration sensor (1, 2) and, following identification of the inertial event (13), evaluates a second signal from the at least one first acceleration sensor (3, 9) for identifying the rollover sequence and actuates restraint means (6, 16) as a function of this evaluation.

2. Method according to Claim 1, **characterized in that** the processor (4, 10, 11) identifies the inertial event (13) as the triggering of restraint means (6, 16) in the event of a frontal impact or a side impact or as a function of an acceleration signal in the longitudinal direction of the vehicle or in the transverse direction of the vehicle.

3. Method according to Claim 1 or 2, **characterized in that** the processor (4, 10, 11) carries out the evaluation by checking features **in that** the acceleration in the vertical direction of the vehicle during the inertial event (13) is negative and has a positive gradient.

4. Method according to Claim 3, **characterized in that** the processor (4, 10, 11) additionally evaluates the acceleration in the transverse direction of the vehicle and/or a rate of rotation about the longitudinal axis of the vehicle in order to identify a sideways movement.

5. Method according to Claims 3 and 4, **characterized in that** the processor (4, 10, 11) evaluates the acceleration of the vehicle in the longitudinal direction of the vehicle.

6. Method according to one of the preceding claims, **characterized in that** the apparatus uses a low-pass filter (10, 11) to filter the acceleration in the vertical direction of the vehicle in order to extract the acceleration due to gravity.

7. Method according to Claim 6, **characterized in that** the acceleration sensor (3, 9) in the vertical direction of the vehicle uses offset control which is designed to be slow.

8. Method according to one of the preceding claims, **characterized in that** it is possible to monitor for a new inertial event if a rollover sequence is not detected after a first inertial event (13).

9. Method according to one of the preceding claims, **characterized in that** plausibility sensors (7, 8) are used.

## Revendications

1. Procédé de détection de retournement avec au moins un capteur d'accélération (3, 9) dans la direction verticale du véhicule et au moins un second capteur d'accélération (1, 2) dans au moins une direction horizontale du véhicule,
**caractérisé en ce qu'**
un processeur (4, 10, 11) reconnaît un événement inertiel (13) en fonction d'un premier signal d'au moins l'un des seconds capteurs d'accélération (1, 2) et après reconnaissance de l'événement inertiel (13) il exploite un second signal d'au moins un premier capteur d'accélération (3, 9) pour détecter le retournement et en fonction de cela il commande les moyens de retenue (6, 16).

2. Procédé selon la revendication 1,
**caractérisé en ce que**
le processeur (4, 10, 11) reconnaît l'événement inertiel (13) comme déclenchement des moyens de retenue (6, 16) en cas de collision frontale ou de collision latérale ou en fonction d'un signal d'accélération dans la direction longitudinale du véhicule ou dans la direction transversale du véhicule.

3. Procédé selon la revendication 1 ou 2,
**caractérisé en ce que**
le processeur (4, 10, 11) effectue l'exploitation par la vérification des caractéristiques **en ce que** pour un événement inertiel (13) l'accélération dans la direction verticale du véhicule est négative et présente un gradient positif.

4. Procédé selon la revendication 3,
**caractérisé en ce que**
le processeur (4, 10, 11) exploite en outre l'accélération dans la direction transversale du véhicule et/ou la vitesse de rotation sur l'axe longitudinal du véhicule pour déceler un mouvement latéral.

5. Procédé selon l'une des revendications 3 et 4,
**caractérisé en ce que**
le processeur (4, 10, 11) exploite l'accélération longitudinale dans la direction longitudinale du véhicule.

6. Procédé selon l'une des revendications précédentes,
**caractérisé en ce que**
le dispositif comporte un filtre passe-bas (10, 11) pour filtrer l'accélération dans la direction verticale du véhicule et extraire l'accélération terrestre.

7. Procédé selon la revendication 6,
**caractérisé en ce que**
le capteur d'accélération (3, 9) utilise une régulation de décalage lente dans la direction verticale du véhicule.

8. Procédé selon l'une des revendications précédentes,
**caractérisé en ce qu'**
en l'absence de détection d'un retournement, après un premier événement inertiel (13), il est possible de surveiller pour un nouvel événement inertiel.

9. Procédé selon l'une des revendications précédentes,
**caractérisé par**
l'utilisation de capteurs de plausibilité (7, 8).
